# EUROPÄISCHE PATENTSCHRIFT

(11) **EP 3 587 084 B1**
(45) Veröffentlichungstag und Bekanntmachung des Hinweises auf die Patenterteilung: **02.06.2021**
(21) Anmeldenummer: 19179510.3
(22) Anmeldetag: 11.06.2019
(51) Int. Cl.: B29C 65/48, B05D 1/32, B29L 31/30

(54) **VERFAHREN ZUM HERSTELLEN EINES KUNSTSTOFFBAUTEILS**
METHOD FOR PRODUCING A PLASTIC COMPONENT
PROCÉDÉ DE FABRICATION D'UN COMPOSANT EN MATIÈRE PLASTIQUE

(30) Priorität: 22.06.2018 DE 102018210215
(43) Veröffentlichungstag der Anmeldung: 01.01.2020
(73) Patentinhaber: Magna Exteriors GmbH, 63877 Sailauf (DE)
(72) Erfinder: HUTTENLOCHER, Marc, 72622 Nürtingen (DE)
(74) Vertreter: Rausch, Gabriele

(56) Entgegenhaltungen:
- CN-A- 101 745 493
- JP-A- S5 916 567
- JP-A- S6 242 770
- JP-A- S61 136 465
- JP-A- S61 245 870

## Beschreibung

Die Erfindung geht aus von einem Verfahren zum Herstellen von Kunststoffbauteilen vorzugsweise für ein Fahrzeug, wobei die Kunststoffbauteile in einem Lackierschritt mindesten teilweise lackiert werden und anschließend auf den nicht lackierten Flächen mit weiteren Bauteilen verbunden werden.

Die Erfindung erstreckt sich auf ein Kunststoffbauteil, das nach dem Verfahren hergestellt wird.

Des Weiteren betrifft die Erfindung eine Bearbeitungsanlage, mit der das Verfahren ausgeführt werden kann.

### Stand der Technik

Im Automobilbau werden seit längerer Zeit großformatige Kunststoffbauteile bzw. Kunststoffbaugruppen verwendet. Für die Karosserie werden dabei Front- oder Heckmodule aus Kunststoff hergestellt, sowie Türen oder Heckklappen oder auch Verkleidungsteile für Schweller oder Fahrzeugsäulen, lackierte Innenverkleidungen, Dachmodule usw.

Je nach Aufgabenstellung der großformatigen Kunststoffbauteile oder Kunststoffbaugruppen werden die Kunststoffbauteile mit weiteren Bauteilen zur Verstärkung oder zur Verkleidung oder zur Aufnahme von funktionalen Bauteilen verbunden.

Aus der EP 2 384 917 B1 ist eine solche Fahrzeugkarosseriegruppe bekannt, bei der Bereiche für die Befestigung vorgesehen sind, und wobei das Bauteil aus mehreren Einzelstrukturen zusammengesetzt ist.

Wenn die Kunststoffbauteile für die Karosserie des Fahrzeugs eingesetzt werden, werden sie im Allgemeinen in der Wagenfarbe lackiert. Die Lackierung erfolgt direkt nach der Herstellung des Bauteils aus Kunststoffspritzguss. Beim Lackieren der oftmals großformatigen Bauteile werden Lackierstraßen eingesetzt, in denen Roboterarme die Kunststoffbauteil mit oder ohne Rahmen halten und einem Lackiernebel aussetzen.

Dabei lässt es sich nicht vermeiden, dass nicht nur die Sichtflächen, die eigentlich lackiert werden sollen, mit Lack versehen werden, sondern dass auch Rückseiten oder verdeckte Flächen durch den sogenannten "Overspray" verunreinigt werden. Dabei handelt es sich um den Niederschlag des Lackiernebels auf dem gesamten Bauteil.

Da die Kunststoffbauteile nach dem Lackieren weiter verbaut und verarbeitet werden müssen, ist diese Verunreinigung durch das Lackieren schädlich. Gerade bei der Verarbeitung der Kunststoffbauteile mithilfe von Fügeverfahren wie Verschweißen oder Verklebungen sind die Lackiererreste für ein sicheres Verarbeiten störend. Um Bereiche auf den Kunstbauteilen frei von Verunreinigungen nach dem Lackieren zu halten, werden in der Produktion Klebestreifen, die sog. Maskierhilfsmittel, auf die Bereiche geklebt, die letztendlich für die weitere Verarbeitung des Kunststoffbauteils benötigt werden oder sie sind durch Maskierformen geschützt, die am Gestell enganliegend am Bauteil sind.

Dieser Maskierungsprozess muss meist manuell durchgeführt werden, auch das Entfernen der Klebestreifen nach dem Lackieren erfolgt manuell. Die Klebestreifen sind dann nicht wiederzuverwenden und können auch nicht wiederverwertet werden.

Das Klebestreifenverfahren kann keine kontinuierlichen Konturen darstellen, da z.B. Radien mit mehreren Klebestreifenteilstücken aufgebracht werden müssen.

Aus der JP S 62 42770 A ist ein Verfahren zur Lackierung von Oberflächen auch von Kunststoffen bekannt. Dabei wird der Lackierprozess erst dann eingesetzt, nachdem das Bauteil mit einem Abziehlack versehen ist, der Verunreinigungen bindet. Nach dem Abziehen des Lacks kann der normale Lackierprozess stattfinden.

Aus der JP S61 245870 A ist ein Lackierverfahren bekannt, bei dem ein abziehbarere Streifen von Lack aufgebracht wird, um einen eine flache Einkerbung abzudecken. Nach dem Entfernen des Streifens wird der Lackierprozesse vollendet.

JP S61 136465 A zeigt ein Verfahren zum Maskieren von Teilbereichen eines Bauteils mit einem Band.

Ausgehend von diesem Stand der Technik ist es die Aufgabe der Erfindung ein Verfahren zur Herstellung von Kunststoffteilen, die lackiert werden, vorzustellen, wobei auf einfache Art und Weise Bereiche maskiert werden. Weiterhin ist es Aufgabe der Erfindung ein Kunststoffbauteil herzustellen, das besonders einfach und kostengünstig für die Weiterverarbeitung vorbereitet, sowie umweltverträglich ist.

Dazu wird eine Bearbeitungsanlage eingesetzt.

Die Aufgabe wird gelöst mit einem Verfahren zum Herstellen von Bauteilsystemen gemäß Anspruch 1.

Im Speziellen wird die Aufgabe gelöst mit einem Verfahren zum Herstellen von Kunststoffbauteilen vorzugsweise für ein Fahrzeug, wobei die Kunststoffbauteile in einem Lackierschritt mindesten teilweise lackiert werden und anschließend auf den nicht lackierten Flächen mit weiteren Bauteilen verbunden werden, wobei mindestens ein Bereich, der zur Verbindung mit den weiteren Bauteilen dient, durch ein vorgeschaltetes Auftrageverfahren eines abdichtenden und ablösbaren Polymers maskiert wird.

Vorteilhafterweise wird mindestens die Vorderseite des Kunststoffbauteils lackiert und auf der Innenseite Verunreinigung durch Overspray durch Abdecken mit dem Polymer vermieden.

Es ist von Vorteil, dass das Auftrageverfahren von einem Roboter entlang vergebener Konturen und vorgegebenen Bereiche ausgeführt wird.

Es ist dabei von Vorteil, dass nach dem Bearbeitungsschritt das Kunststoffbauteil in einem weiteren Kombinationsschritt mit weiteren Bauteilen aus Kunststoff und/oder aus Metall und /oder aus Kompositmaterial in den Bereichen zur Verbindung verbunden wird. Vorteilhafterweise werden die Bereiche zur Verbindung geklebt, wobei in einer vorteilhaften Ausführungsform dasselbe Polymer wie zum Abdecken der Bereiche zur Verbindung verwendet wird. Zudem kann der Roboterarm dieselbe Kontur bzw. dieselben Bereiche mit Polymer abdecken, die beim Verkleben verwendet werden.

Die Aufgabe wird weiterhin gelöst mit Kunststoffbauteile hergestellt nach dem Verfahren, wobei die Kunststoffbauteile Heckklappen, oder Frontmodule oder Heckmodule oder Schwellverkleidungen, Dachmodule oder Frontschürzen eines Fahrzeugs sind.

Die Aufgabe wird auch gelöst mit einer Bearbeitungsanlage, die Stationen enthalten kann, die mindestens eine Station zur Abdeckung von Bereichen mit Polymer umfasst.

Es ist von Vorteil, dass die Bearbeitungsanlage eine Station zur mechanischen Bearbeitung mit Stanz-und oder Bohrwerkzeugen enthält.

Weitere ist es vorteilhaft, wenn eine Station zum Verkleben von Bauteilen vorhanden ist. Allerdings müssen die Stationen nicht voneinander getrennt vorliegen.

Daher ist es von Vorteil, dass das Auftrageverfahren und das Kombinationsverfahren in derselben Bearbeitungsstation erfolgen unter Verwendung desselben Roboters. Eine Dosieranlage kann für das Verkleben, wie auch für die Maskierung verwendet werde, es können auch zwei getrennte Dosieranlagen bestehen.

Eventuell wird auch das desselben Polymer verwendet

### Beschreibung der Erfindung

Die Erfindung wird in der nachfolgenden Ausführung erläutert und mit Figuren dargestellt.
Figur 1 zeigt ein Beispiel einer Fahrzeugheckklappe,
Figur 2 zeigt schematisch Herstellungsschritte,
Figur 3 zeigt schematisch eine Bearbeitungsstation.

Beispielhaft wird das erfindungsgemäße Verfahren an einem Kunststoffbauteil 4 dargestellt, wobei das Verfahren auch auf Bauteile 40 anwendbar ist, die aus anderen Materialien bestehen.

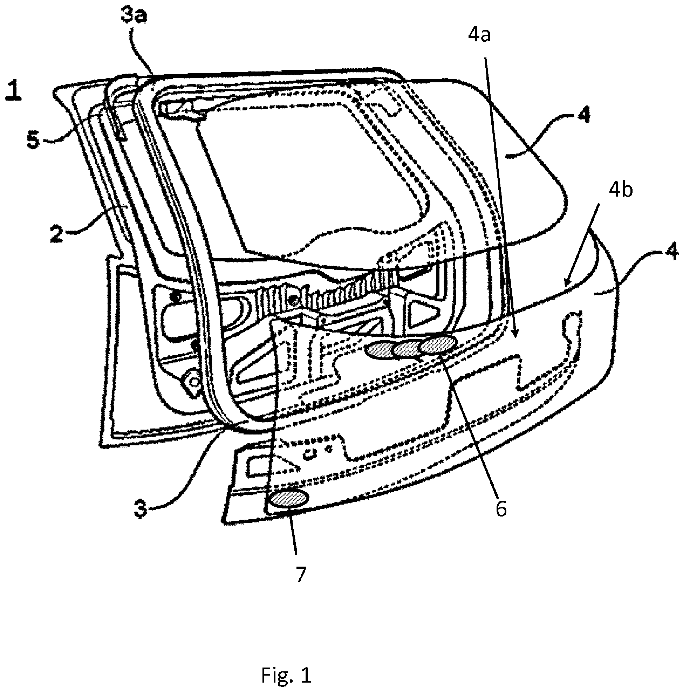

In Figur 1 sind die Hauptbestandteile einer Heckklappe 1 dargestellt, die als ein Beispiel für großflächige Kunststoffbauteile als Verkleidungsteile dient. Als Basis der Heckklappe dient ein Trägerteil 2, das beispielsweise aus faserverstärkten Kunststoffen hergestellt ist. Der versteifende Rahmen 3 ist eine geschlossene Form oder auch eine nichtgeschlossene, beliebige Form aus einem Polyurethan-Material oder andere Verbundmaterialien. Die Kunststoffbauteile 4 werden mit dem Trägerteil 2 verbunden. Zur Versteifung der Heckklappe sind Versteifungselemente 5 vorgesehen, die in diesem Ausführungsbeispiel aus Metall hergestellt sind und im Bereich 3a angeordnet sind. Sie werden getrennt mit dem Trägerteil 2 verbunden.

Die Kunststoffbauteile 4 als Verkleidungsteile sind dabei auf ihren sichtbaren Flächen 4a lackiert. Die Lackierung kann dabei natürlich auch Bereiche des Rands der Kunststoffbauteile 4 umfassen, die nach dem Zusammenbau sichtbar bleiben.

Auf der Innenseite 4b der Kunststoffbauteile 4 sind Bereiche 6 vorhanden, die für die Verbindung des Kunststoffbauteils 4 mit dem Trägerteil 2 von Verunreinigungen befreit werden müssen.

Weiterhin kann das Kunststoffbauteil 4 auch Bereiche 7 aufweisen, die für die Aufnahme von Sensoren vorbereitet werden müssen, und ebenfalls vor Verunreinigungen befreit werden. Die Kunststoffbauteile 4 an der Heckklappe sind beispielhaft für die Kunststoffbauteile, die am Fahrzeug mit außen sichtbaren Lackflächen montiert sind.

Bisher wurden die Bereiche 6 mit Klebestreifen manuell abgedeckt. Besonders bei komplizierten Konturen ist der Aufwand nicht zu vernachlässigen. Nachdem die Bauteile 4 lackiert sind, werden die Klebestreifen wieder manuell entfernt.

Die erfindungsgemäße Lösung sieht vor, die Bereiche 6, die vor Verunreinigung mit Lacknebel zu schützen sind, mit einem Polymer abzudecken. Das Polymer kann dabei der Kleber sein, der in einem späteren Verfahrensschritt Bauteile miteinander verbindet. Das Polymer soll einfach auftragbar sein und soll sich als geschlossener Film auf einfache Art und Weise auch wieder ablösen lassen.

Zur Verwendung kommt dabei beispielsweise RAKU-PUR® 32-3250 / RAKU PUR 32-3278-, ein thixotropes Zweikomponentensystem auf Polyurethanbasis. Es besteht aus einer gefüllten Komponente A und einem Isocyanathärter B. Das System enthält keine Lösungsmittel oder Weichmacher, somit auch für spannungsrissempfindliche Materialien bzw. emissionsbeschränkter Anwendung (Geruch, Ausgasungen) denkbar.

Dieses Material zeigt die Eigenschaften, die zur Verwendung als abdeckende Polymerstruktur von Bedeutung sind. Es zeigt eine hohe Reißfestigkeit, was beim Ablösen der Polymerstruktur von Bedeutung ist. Durch eine gewisse Höhe des Materials, die beim Aufbringen einstellbar ist, ist ein Entfernen viel leichter als das Entfernen eines Klebebands. Das Material lässt sich auch mit kurzen Klebezeiten verbauen, was dann von Bedeutung ist, wenn das Polymer auch als Klebemittel zur Anwendung kommt.

Die Verwendung desselben Materials zum Abdecken und zum Kleben von Bauteilen ist eine optimale Lösung, da hierzu nur eine Bearbeitungsstation und/oder nur ein Roboter verwendet werden muss. Zudem sind die Konturen bzw. Bereiche 6 für die Abdeckung mit den Konturen bzw. Bereichen zur Verklebung identisch. So kann die Steuerung, einmal eingestellt, den Roboterarm sowohl für das Abdecken, als auch für das Verkleben nutzen. Das Maskierungsmaterial muss gegebenenfalls etwas flüssiger eingestellt werden, damit eine breitere Abdeckung zustande kommt, während die Kleberaupe durch das Fügen der Bauteile verpresst wird. Dabei muss beachtete werden, dass der Kleber kleben muss, die Maskierung dagegen muss wieder lösbar sein.

Das Beispiel ist aus dem Automobilbau gewählt, aber auch für andere Medien, die lackiert werden, verwendbar, z.B. Hybrid- / Kompositbauteile, Metallbauteile.

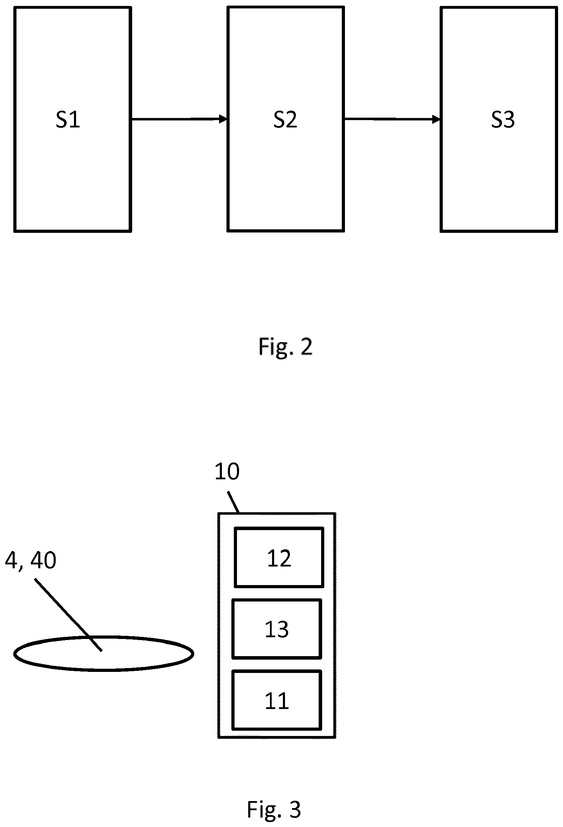

In Figur 2 ist schematisch das Bearbeitungsverfahren in den drei Hauptschritten dargestellt. Das Bearbeitungsverfahren soll dabei nicht allein auf diese drei Hauptschritte limitiert sein.

In einem ersten Bearbeitungsschritt S1 wird das Kunststoffbauteil 4 - stellvertretende für alle Bauteile 40- mit dem abdeckenden Polymer versehen. Dazu wird das Kunststoffbauteil 4 in einer Bearbeitungsstation bearbeitet, indem ein Roboterarm eine Raupe des Polymermaterials aufträgt. Dabei sind geschwungene, dreidimensional verlaufende Konturen mit einem Raupenzug zu bearbeiten und werden in einer kontinuierlichen Bahn aufgebracht.

Beispielsweise kann eine kreisrunde Bahn um ein Befestigungselement gezogen werden.

Anschließend wird das Kunststoffbauteil 4 der zweiten Bearbeitungsstation überführt. Die Raupe kann so breit wie Kleberaupe oder was von Vorteil ist breiter sein, dies geschieht durch flüssigere Mixtur bzw. durch Verwendung einer anderen Mischung aus einer zweiten Dosieranlage.

Die Bauteile werden meist vor dem Lackieren gereinigt. Beispielsweise werden dazu so genannte Power-Wash Anlagen verwendet. Dabei muss die Maskierung natürlich dem Transport und auch der Anwendung durch die Power-Wash Anlage standhalten.

Im zweiten Bearbeitungsschritt dem Lackierschritt S2, bzw. in einer zweiten Bearbeitungsstation, werden die Kunststoffbauteile 4, z.B. die Verkleidungsteile, lackiert. Dabei werden die Kunststoffbauteile 4 in unterschiedlichen Orientierungen bearbeitet. Besonders bei der Verwendung von Lackiererrobotern sowie von Roboterarmen, die die Bauteile mit oder ohne Rahmen führen, werden die Kunststoffbauteile 4 in unterschiedlichsten Orientierungen gehalten und so lackiert.

Die lackierten Kunststoffbauteile müssen jetzt vor ihrer weiteren Bearbeitung und dem Zusammenfügen zu einem gesamten Bauteil von dem mit Lacknebel verunreinigten Polymer befreit werden. Dazu wird die Polymerraupe entweder manuell oder durch Abziehen durch einen Roboter entfernt.

Vorteilhaft ist, wenn das Maskierungsmaterial den Lack bindet und eine saubere, flitterfrei Abreißkante gewährleistet. PUR Systeme können dies darstellen.

Die abgezogene Maskierungsraupe kann mit einem PUR System problemlos und wirtschaftlich wiederverwertet werden, was mit einem Maskierungsklebeband nur sehr schwer wirtschaftlich vorstellbar ist und in der Produktion nicht gemacht wird.

Zudem ist noch hervorzuheben, dass bei der Maskierung keine Rückstände für den weiteren Klebeprozess zurückbleiben dürfen.

Die Bearbeitungsanlage 10 im Bearbeitungsschritt S3 übernimmt das lackierte Kunststoffbauteil 4 automatisch oder manuell und enthält mindestens eine Bearbeitungsstation 13, in der das Kunststoffbauteil 4 mit weiteren Bauteilen verklebt wird.

Unter "weiteren Bauteilen" sind dabei Bauteile aus demselben Material, wie die Bauteile 40, gemeint, oder aus anderem Material, sowie funktionale Bauteile wie Sensoren, oder Verbinder oder Schlösser etc.

Im nächsten Verarbeitungsschritt S3 wird das vorbereitete Kunststoffbauteil 4 mit weiteren Komponenten und weiteren Bauteilen verbunden.

In Figur 3 ist die Bearbeitungsanlage 10 ebenfalls schematisch dargestellt. Die Bearbeitungsanlage 10 weist dabei eine Station 11 zum Abdecken von Bereichen 6, 7 auf.

Weiterhin kann in der Bearbeitungsanlage 10 eine Station 12 zur mechanischen Bearbeitung mit Stanz-und oder Bohrwerkzeugen enthalten sein.

Im Ausführungsbeispiel enthält die Bearbeitungsanlage 10 weiterhin eine Station 13, die für das Kleben von Bauteilen ausgelegt ist.

Die beiden Stationen 11 und 13, die beide unter Verwendung eines Roboterarms arbeiten, können auch als eine gemeinsame Station ausgelegt sein. Eine solche Lösung ist besonders vorteilhaft, da der Roboter sowohl die Abdeckung, als auch die Verklebung mit demselben Material aufbringen kann.

Das erfindungsgemäße Verfahren kann für jegliche Lackierung bzw. für jedes zu lackieren Medium verwendet werden, hierzu ist das Material der Maskierung auf das jeweilige Medium zu modifizieren.

Beispielsweise kann die Maskierung auch mittels anderer Materialsysteme wie z.B. Silikon ausgeführt werden, wobei Silicon meist mit den bestehenden, klassischen Lackierungen unvorteilhaft ist.

Das Maskieren wird auch in anderen Beschichtungsanwendungen verwendet, z.B. Pulverbeschichten oder sogar für Galvanikanwendung.

### Bezuaszeichen

1 Bauteil
2 Trägerteil
3 Rahmen
3a Bereich des Rahmens
4 Kunststoffbauteil
4a sichtbaren Flächen
4b Innenseite
5 Verstärkungsteil
6 Bereiche für Verbindung
7 Bereiche für Funktionen
S1,S2, S3 Bearbeitungsschritte
10 Bearbeitungsanlage
11 Station zur Abdeckung
12 Station für mechanische Bearbeitung
13 Station zum Verkleben
40 Bauteile

## Patentansprüche

1. Verfahren zum Herstellen von Bauteilsystemen, wobei Bauteile (40) mindestens einen Bereich (6, 7) aufweisen, der zur Verbindung mit den weiteren Bauteilen dient, wobei der mindestens eine Bereich (6,7) durch ein vorgeschaltetes Auftrageverfahren (S1) eines abdichtenden und ablösbaren Polymers maskiert wird, und die Bauteile (40) in einem Bearbeitungsschritt (S2) mindesten teilweise lackiert oder beschichtet werden, wobei das Polymer als geschlossener Film auf einfache Art und Weise abgelöst wird und **dadurch gekennzeichnet, dass** die Bauteile anschließend auf nicht lackierten oder beschichteten Flächen die den maskierten Bereichen (6, 7) entsprechen, mit den weiteren Bauteilen verbunden werden.

2. Verfahren zum Herstellen von Bauteilen (40) nach Anspruch 1, wobei die Bauteile (40) aus Kunststoff oder Metall oder einen Kompositmaterial bestehen.

3. Verfahren nach Anspruch 1 oder 2, **dadurch gekennzeichnet, dass** mindestens die Vorderseite (4a) des Bauteils (40) lackiert wird und auf der Innenseite (4b) Verunreinigungen durch Overspray durch Abdecken mit dem Polymer vermieden werden.

4. Verfahren nach einem der vorhergehenden Ansprüchen, **dadurch gekennzeichnet, dass** das Auftrageverfahren (S1) von einem Roboter entlang vergebener Konturen und vorgegebenen Bereiche (6, 7) ausgeführt wird.

5. Verfahren nach einem der vorhergehenden Ansprüchen, **dadurch gekennzeichnet, dass** nach dem Bearbeitungsschritt (S2) das Kunststoffbauteil (4) in einem Kombinationsverfahren (S3) mit weiteren Bauteilen aus Kunststoff und/oder aus Metall und /oder aus Verbundmaterial in den Bereichen (6) zur Verbindung verbunden wird.

6. Verfahren nach einem der vorhergehenden Ansprüche, **dadurch gekennzeichnet, dass** die Bereiche (6) zur Verbindung geklebt werden.

7. Verfahren nach einem der vorhergehenden Ansprüche, **dadurch gekennzeichnet, dass** das Auftrageverfahren (S1) und das Kombinationsverfahren (S3) in derselben Bearbeitungsstation erfolgen unter Verwendung desselben Roboters.

## Claims

1. Method for producing component systems, wherein components (40) have at least one region (6, 7), which is used for connecting to the further components, wherein the at least one region (6, 7) is masked by a preceding application process (S1) of applying a sealing, detachable polymer, and in a processing step (S2) the components (40) are at least partially painted or coated, wherein the polymer, as a closed film, is detached in an easy way, and **characterized in that** the components are then connected on non-painted or coated areas, which correspond to the masked regions (6, 7), to the further components.

2. Method for producing components (40) according to Claim 1, wherein the components (40) consist of plastic or metal or a composite material.

3. Method according to Claim 1 or 2, **characterized in that** at least the front side (4a) of the component (40) is painted and contamination caused by overspray is avoided on the inner side (4b) by covering with the polymer.

4. Method according to one of the preceding claims, **characterized in that** the application process (S1) is performed by a robot along given contours and given regions (6, 7).

5. Method according to one of the preceding claims, **characterized in that**, after the processing step (S2), in a combination process (S3) the plastic component (4) is connected to further components of plastic and/or of metal and/or of composite material in the regions (6) for connection.

6. Method according to one of the preceding claims, **characterized in that** the regions (6) for connection are adhesively attached.

7. Method according to one of the preceding claims, **characterized in that** the application process (S1) and the combination process (S3) are performed on the same processing station, using the same robot.

## Revendications

1. Procédé de fabrication de systèmes de composants, des composants (40) comportant au moins une zone (6, 7) qui est utilisée pour la liaison aux autres composants, l'au moins une zone (6, 7) étant masquée par un procédé amont (S1) d'application d'un polymère étanche et détachable, et les composants (40) étant au moins partiellement peints ou enduits dans une étape de traitement (S2), le polymère étant détaché sous la forme d'un film fermé de manière simple et **caractérisé en ce que** les composants sont ensuite reliés aux autres composants sur des surfaces non peintes ou enduites qui correspondent aux zones masquées (6, 7).

2. Procédé de fabrication de composants (40) selon la revendication 1, les composants (40) étant en matière synthétique ou en métal ou en matériau composite.

3. Procédé selon la revendication 1 ou 2, **caractérisé en ce qu'**au moins le côté avant (4a) du composant (40) est peint et, du côté intérieur (4b), des impuretés dues à une surpulvérisation sont évitées par revêtement avec le polymère.

4. Procédé selon l'une des revendications précédentes, **caractérisé en ce que** le procédé d'application (S1) est réalisé par un robot selon des contours attribués et des zones spécifiées (6, 7).

5. Procédé selon l'une des revendications précédentes, **caractérisé en ce qu'**après l'étape de traitement (S2) le composant (4) en matière synthétique est relié, dans un procédé de combinaison (S3), à d'autres composants en matière plastique et/ou en métal et/ou en matériau composite dans les zones (6) destinées à la liaison.

6. Procédé selon l'une des revendications précédentes, **caractérisé en ce que** les zones (6) destinées à la liaison sont collées.

7. Procédé selon l'une des revendications précédentes, **caractérisé en ce que** le procédé d'application (S1) et le procédé de combinaison (S3) sont mis en oeuvre dans le même poste de traitement à l'aide du même robot.
